# EUROPEAN PATENT APPLICATION

(11) **EP 3 171 555 A1**
(43) Date of publication of application: **24.05.2017**
(21) Application number: 15832462.4
(22) Date of filing: 05.08.2015
(51) Int. Cl.: H04L 12/713, H04L 12/26

(54) **FAULT DETECTION METHOD FOR VIRTUAL ROUTER REDUNDANCY PROTOCOL AND ROUTER DEVICE**

(30) Priority: 12.08.2014 CN 201410395694
(71) Applicant: Huawei Technologies Co., Ltd., Longgang District Shenzhen, Guangdong 518129 (CN)
(72) Inventor: ZHANG, Chengsong, Shenzhen Guangdong 518129 (CN); ZHANG, Qiang, Shenzhen Guangdong 518129 (CN); WEN, Shuangquan, Shenzhen Guangdong 518129 (CN)
(74) Representative: Gill Jennings & Every LLP
(86) International application number: PCT/CN2015/086150
(87) International publication number: WO 2016/023436

(57) **Abstract**

A VRRP fault detection method is applied to a VRRP group including one primary router and one or more secondary routers. The method includes: sending, by the primary router and the secondary router, link detection packets having an echo response function, where a destination address of the link detection packet is a virtual address of the VRRP group; and determining, by the primary router and the secondary router, whether response packets corresponding to the link detection packets sent by the primary router and the secondary router are received within a predetermined time, and if the primary router and/or the secondary router does not receive the response packet within the predetermined time, determining that the primary router is faulty.

## Description

This application claims priority to Chinese Patent Application No. 201410395694.3, filed with the Chinese Patent Office on August 12, 2014 and entitled "VIRTUAL ROUTER REDUNDANCY PROTOCOL FAULT DETECTION METHOD AND ROUTING DEVICE", which is incorporated herein by reference in its entirety.

### TECHNICAL FIELD

The present invention relates to the communications field, and in particular, to a virtual router redundancy protocol fault detection method and a routing device.

### BACKGROUND

A virtual routing redundancy protocol (Virtual Router Redundancy Protocol, VRRP for short) is an error tolerance protocol. The protocol ensures, by combining several physical routing devices into one virtual routing device and by using a mechanism, to switch a service to another router in time when a next-hop router of a host is faulty, so as to maintain continuity and reliability of communication.

The VRRP allocates routers in a local area network into a group, where the group of routers is referred to as a VRRP backup group (a VRRP group for short). The VRRP group is equivalent to a virtual router. The virtual router has a virtual Internet Protocol (Internet Protocol, IP) address. The host in the local area network only needs to know a virtual IP address of the virtual router and set the virtual IP address of the virtual router to a next-hop address of a default route, and then the host can communicate with an external network by using the virtual router. The VRRP group includes one primary router and multiple secondary routers. The primary router is elected according to a priority election mechanism, to functions as a gateway, respond to an Address Resolution Protocol (Address Resolution Protocol, ARP) request for the virtual IP address, and forward a packet whose destination Media Access Control (Media Access Control, MAC) address is a MAC address of the virtual router. The virtual IP address of the VRRP group actually points to the primary router. Another router in the VRRP group is a secondary router. When the primary router is faulty, the secondary router replaces, by using the priority election mechanism, the primary router to continue functioning as the gateway, so as to ensure that the host in the network uninterruptedly communicates with the external network.

A conventional VRRP performs fault detection by sending a Hello packet at a scheduled time, and a default time interval of sending a VRRP protocol packet is one second. When the secondary router cannot receive a Hello packet of the primary router for consecutive three times, a new primary router is determined among the secondary routers by means of priority election, so as to perform active/standby switching. Because a minimum time interval of sending the Hello packet is usually one second, a link fault status can be perceived by the secondary router in at least three seconds, which is a relatively long convergence time for a real-time service that needs to rapidly perceive the link fault status.

### SUMMARY

An objective of the present invention is to provide a virtual routing redundancy protocol fault detection method and a routing device.

According to an aspect, an embodiment of the present invention provides a virtual routing redundancy protocol fault detection method, where the method is applied to a virtual routing redundancy protocol VRRP group including one primary router and one or more secondary routers, and the method includes:
sending, by the primary router and the secondary router, link detection packets having an echo response function, where a destination address of the link detection packet is a virtual address of the VRRP group; and
determining, by the primary router and the secondary router, whether response packets corresponding to the link detection packets sent by the primary router and the secondary router are received within a predetermined time, and if the primary router and/or the secondary router does not receive the response packet within the predetermined time, determining that the primary router is faulty.

In a first possible implementation manner of the first aspect, the link detection packet is an ECHO-type bidirectional forwarding detection BFD packet.

According to a second aspect, an embodiment of the present invention provides a routing device, where the routing device is applied to a virtual router redundancy protocol VRRP group including one primary router and one or more secondary routers, the routing device is one of the primary router or the secondary routers, and the routing device includes:
a sending module, configured to send a link detection packet having an echo response function, where a destination address of the link detection packet is a virtual address of the VRRP group; and
a determining module, configured to: determine whether a response packet corresponding to the link detection packet sent by the sending module is received within a predetermined time, and if the response packet is not received within the predetermined time, determine that the primary router is faulty.

In a first possible implementation manner of the second aspect, the link detection packet sent by the sending module is an ECHO-type bidirectional forwarding detection BFD packet.

According to a third aspect, an embodiment of the present invention provides a virtual routing redundancy protocol VRRP group, where the VRRP group includes one primary router and multiple secondary routers, the primary router and the secondary routers are configured to: send link detection packets having an echo response function, where a destination address of the link detection packet sent by each of the primary router and the secondary routers is a virtual IP address of the VRRP group; and if the primary router and/or the secondary router does not receive a response packet within a predetermined time, determine that the primary router is faulty.

In a first possible implementation manner of the first aspect, the link detection packet is an ECHO-type bidirectional forwarding detection BFD packet.

Technical solutions of the embodiments of the present invention may implement rapid fault detection on a VRRP group network in a one primary multiple secondaries environment. The reason why in the prior art, configuration of a link detection session by the VRRP group is hard to implement in the one primary multiple secondaries network environment is that the link detection session needs to be established between every two routers of all routers, so as to ensure that after the VRRP group performs active/standby switching, the link detection session can still exist between all secondary routers and a primary router. Therefore, each router in the VRRP group simultaneously receives a link detection packet from a primary router and a link detection packet from another secondary routing. However, because a primary router and a secondary router in the VRRP group are dynamically switched, and it cannot be identified, by using the link detection packets, whether a detected faulty link is a link to which the primary router belongs or a link to which the secondary router belongs, the VRRP group cannot be triggered to perform active/standby switching. However, in the technical solutions of the embodiments of the present invention, an echo-response-type packet is used as a fault detection packet and a peer IP address is set to a virtual IP address of the VRRP group. Therefore, regardless of whether the active/standby switching is performed or the primary router is changed, the secondary router always detects a status of a link between the secondary routing and the primary router by using the echo response packet. In addition, the echo response packet does not need to be configured for a peer end, and therefore, after the active/standby switching is performed, no configuration needs to be performed on the VRRP group, and detection on the link between the primary router and the secondary routing may be persistently implemented. Based on this, as long as a router in the VRRP group detects a response packet of an echo response detection packet sent by the router, the router can determine whether the primary router is faulty, thereby achieving an objective of rapidly detecting a fault.

### BRIEF DESCRIPTION OF DRAWINGS

FIG. 1 is a flowchart of a method according to an embodiment of the present invention;
FIG. 2 is a schematic diagram of a network environment according to an embodiment of the present invention;
FIG. 3 is a schematic diagram of a network environment according to an embodiment of the present invention;
FIG. 4 is a schematic diagram of a network environment according to an embodiment of the present invention;
FIG. 5 is a schematic diagram of a network environment according to an embodiment of the present invention; and
FIG. 6 is a schematic diagram of a routing device according to an embodiment of the present invention.

### DESCRIPTION OF EMBODIMENTS

To make the objectives, technical solutions, and advantages of the embodiments of the present invention clearer and more comprehensible, the following further describes the present invention in detail with reference to the accompanying drawings and embodiments. It should be understood that the specific embodiments described herein are merely used to explain the present invention but are not intended to limit the present invention.

A virtual routing redundancy protocol VRRP group includes one primary router and multiple secondary routers, where each router in the VRRP group sends a link detection packet having an echo response function, and a destination address of the link detection packet sent by each router in the VRRP group is a virtual IP address of the VRRP group. If the primary router and/or the secondary router does/do not receive the response packet within a predetermined time, it is determined that the primary router is faulty.

Because a rapid detection means includes many technologies such as bidirectional forwarding detection (Bidirectional Forwarding Detection, BFD) and OAM (Operation Administration and Maintenance, operation, administration and maintenance), only the BFD is used as an example in a solution mentioned in this application. However, the link detection packet in this solution is not limited to a BFD packet, and another rapid detection means that can implement the echo response function may also be applied to this solution.

### Embodiment 1

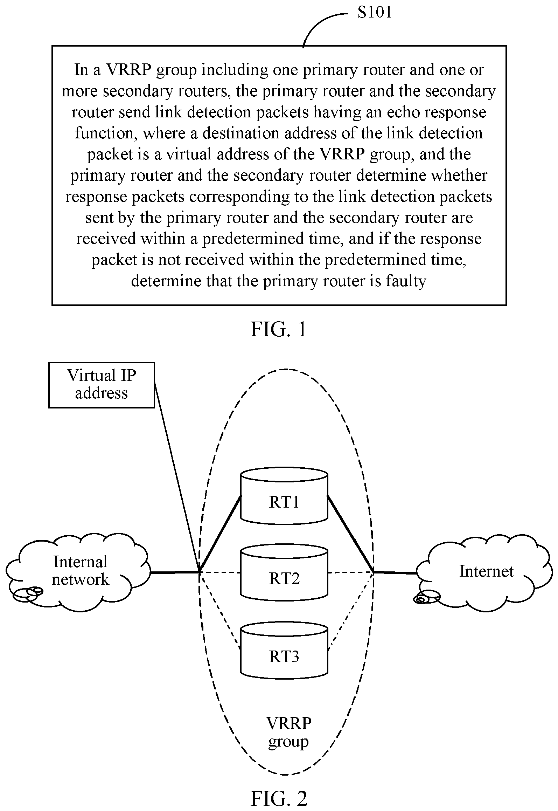

According to this embodiment, a virtual routing redundancy protocol fault detection method is provided. As shown in FIG. 1, in a VRRP group including one primary router and one or more secondary routers, the primary router and the secondary router send link detection packets having an echo response function, where a destination address of the link detection packet is a virtual address of the VRRP group. The primary router and the secondary router detect whether response packets corresponding to the link detection packets sent by the primary router and the secondary router are received within a predetermined time, and if the primary router and/or the secondary router does not receive the response packet within the predetermined time, it is determined that the primary router is faulty.

Optionally, the link detection packet is an ECHO-type BFD packet.

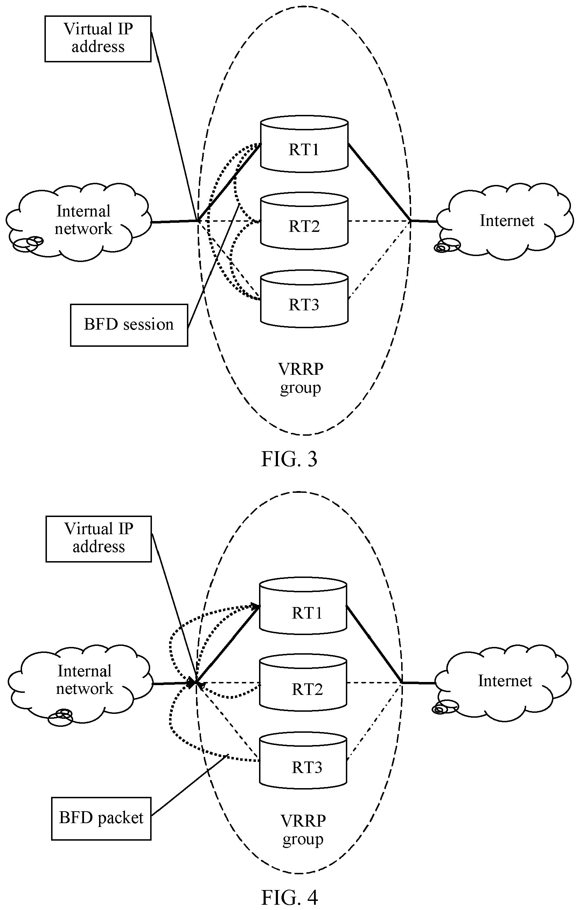

An application scenario of this embodiment is shown in FIG. 2. A virtual router, that is, a VRRP group includes three routers, which are a primary router RT1 and secondary routers RT2 and RT3. An external network is connected to the primary router RT1 in the VRRP group by using a virtual IP address of a VRRP. In this scenario, if a conventional link detection means, for example, configuring a bidirectional detection BFD packet to implement rapid detection on a link fault, needs to configure a BFD session between every two routers of the three routers, that is, BFD sessions between the RT1 and the RT2, between the RT1 and the RT3, and between the RT2 and the RT3, as shown in FIG. 3. The BFD session between the RT1 and the RT2 and the BFD session between the RT1 and the RT3 are used to detect a fault of a link between a primary router and a secondary router, so as to trigger the secondary router to perform active/standby switching. Moreover, the BFD session between the RT2 and the RT3 is used to ensure that after the active/standby switching, when either of the secondary routers becomes active, a BFD session that can be used to detect a status of a link between the primary router and the secondary router exists between the secondary router and two other routers. In the scenario, for either of the secondary routers, such as the RT2, two BFD sessions are established. When one of the BFD sessions detects a link fault and a BFD packet whose status is DOWN is returned, because the primary router and the secondary router in the VRRP group are dynamically switched between each other, the router RT2 cannot directly determine, according to the received BFD packet whose status is DOWN, whether the primary router is faulty. Therefore, the active/standby switching cannot be performed.

Specifically, according to this embodiment, as shown in FIG. 4, an ECHO-type BFD detection packet is configured for each of three routers, that is, a primary routing RT1 and secondary routings RT2 and RT3, where a peer IP address of the ECHO-type BFD detection packet is configured as a virtual IP address of a current VRRP group. Because only the primary router in the VRRP group responds to an ARP request for an IP address of a virtual router and forwards a packet whose destination MAC address is a MAC address of the virtual router, the primary router always responds to the ECHO-type BFD packet and returns a response packet. The primary router and the secondary router both detect whether the response packets of the ECHO-type BFD packets sent by the primary router and the secondary router are received within a predetermined time. If the response packets are not received within the predetermined time, it is determined that the primary router is faulty. In this case, the BFD detection packet configured for the primary router RT1 detects a local link of the RT1 and does not detect a link fault; and the BFD detection packets configured for the secondary routers RT2 and RT3 detect a status of a link between the primary router and a secondary router. In the scenario, each of all the routers only needs to detect one BFD packet, that is, a response packet of the ECHO-type BFD detection packet. Therefore, the foregoing problem that multiple packets are simultaneously detected when an ordinary BFD session is established does not occur, so as to implement rapid fault detection in a one primary multiple secondaries scenario.

After detecting that the primary router is faulty, the secondary routers RT2 and RT3 separately trigger active/standby switching of the VRRP group, and start to perform priority election according to a VRRP protocol, to determine a new primary router.

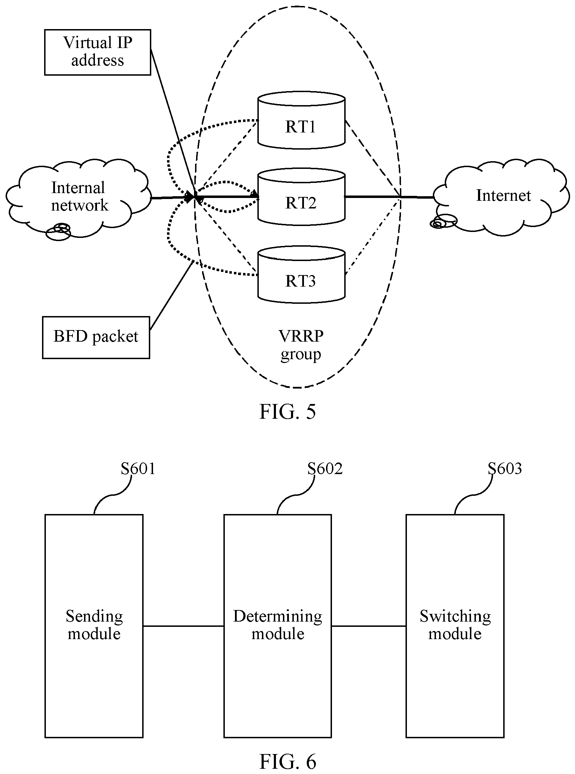

In this embodiment, after active/standby switching is performed, an example in which RT2 becomes active is used, an application scenario of which is shown in FIG. 5. After the RT2 becomes active, a virtual IP address of a VRRP group points to the RT2. Before the active/standby switching, the RT2 responds to ECHO-type BFD detection packets configured for RT1, the RT2, and RT3 and returns response packets. Because the ECHO-type BFD packet does not need to be configured for a peer end, after the active/standby switching is performed on routers in the entire VRRP group, the secondary routers RT1 and RT3 in the VRRP group, continue to detect, by detecting response packets of the ECHO-type BFD packets sent by the secondary routers RT1 and RT3, a status of a link between the secondary routers RT1 and RT3 and the primary router RT2, so as to determine whether the primary router is faulty. That is, by using the method, continuous fault detection on a link between a primary router and a secondary router in the VRRP group after the active/standby switching may be implemented without any intervention.

### Embodiment 2

Corresponding to the foregoing virtual routing redundancy protocol fast convergence method, this embodiment of the present invention further provides a routing device. FIG. 6 is a schematic structural diagram of the routing device, the routing device is applied to a virtual router redundancy protocol VRRP group including one primary router and one or more secondary routers, the routing device is one of the primary router or the secondary routers, and the routing device includes a sending module 601, a determining module 602, and a switching module 603.

The sending module 601 is configured to send a link detection packet having an echo response function, where a destination address of the link detection packet is a virtual IP address of the VRRP group in which the sending module 601 is located.

The determining module 602 is configured to: determine whether a response packet corresponding to the link detection packet sent by the sending module 601 is received within a predetermined time, and if the response packet is not received within the predetermined time, determine that the primary router is faulty.

Optionally, the routing device may further include the switching module 603, which is configured to perform active/standby switching when the primary router is faulty.

Optionally, the link detection packet that has the echo response function and that is sent by the sending module 601 is an ECHO-type BFD packet.

As can be seen from the foregoing embodiment, the device is configured in the VPPR group. In a one primary multiple secondaries case, the device sends the ECHO-type BFD packet to the virtual IP address of the VRRP group in which the device is located, and listens to the response packet of the BFD packet, to detect whether the primary router is faulty. When the primary router is faulty, the VRRP group is triggered to perform active/standby switching.

As described above, the routing device may implement rapid detection on a fault in a one primary multiple secondaries VRRP network environment. After it is detected that the primary router is faulty and the active/standby switching is performed, continuous detection on a status of the primary router after the switching may be implemented by the apparatus without the need of performing extra setting on the apparatus.

It should be noted that a person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

The virtual router redundancy protocol fault detection method and apparatus that are provided in the present invention are described in detail above. The principle and the implementation manners of the present invention are described herein through specific embodiments. The description about the embodiments is merely used to help understand the method and core ideas of the present invention. In addition, a person of ordinary skill in the art can make variations to the present invention in terms of the specific implementation manners and application scopes according to the ideas of the present invention. In conclusion, the content of this specification shall not be construed as a limitation to the present invention.

## Claims

1. A virtual router redundancy protocol VRRP fault detection method, wherein the method is applied to a VRRP group comprising one primary router and one or more secondary routers, and the method comprises:
sending, by the primary router and the secondary router, link detection packets having an echo response function, wherein a destination address of the link detection packet is a virtual address of the VRRP group; and
determining, by the primary router and the secondary router, whether response packets corresponding to the link detection packets sent by the primary router and the secondary router are received within a predetermined time, and if the primary router and/or the secondary router does not receive the response packet within the predetermined time, determining that the primary router is faulty.

2. The method according to claim 1, wherein the link detection packet is an ECHO-type bidirectional forwarding detection BFD packet.

3. A routing device, wherein the routing device is applied to a virtual router redundancy protocol VRRP group comprising one primary router and one or more secondary routers, the routing device is one of the primary router and the secondary routers, and the routing device comprises:
a sending module, configured to send a link detection packet having an echo response function, wherein a destination address of the link detection packet is a virtual address of the VRRP group; and
a determining module, configured to: determine whether a response packet corresponding to the link detection packet sent by the sending module is received within a predetermined time, and if the response packet is not received within the predetermined time, determine that the primary router is faulty.

4. The routing device according to claim 3, wherein the link detection packet sent by the sending module is an ECHO-type bidirectional forwarding detection BFD packet.

5. A virtual routing redundancy protocol VRRP group, wherein the VRRP group comprises one primary router and multiple secondary routers, the primary router and the secondary routers are configured to: send link detection packets having an echo response function, wherein a destination address of the link detection packet sent by each of the primary router and the secondary routers is a virtual IP address of the VRRP group; and if the primary router and/or the secondary router does not receive a response packet within a predetermined time, determine that the primary router is faulty.

6. The VRRP group according to claim 3, wherein the link detection packet is an ECHO-type bidirectional forwarding detection BFD packet.
